# EUROPEAN PATENT SPECIFICATION

(11) **EP 2 215 448 B1**
(45) Date of publication and mention of the grant of the patent: **30.03.2011**
(21) Application number: 08855574.3
(22) Date of filing: 27.10.2008
(51) Int. Cl.: G01N 1/22, G01N 22/00

(54) **MEASUREMENT OF RESIDUAL CARBON CONTENT IN FLY ASH**
MESSUNG DES KOHLENSTOFFRESTGEHALTS IN FLUGASCHE
MESURE D'UNE TENEUR EN CARBONE RÉSIDUEL DANS DE LA CENDRE VOLANTE

(30) Priority: 30.11.2007 DK 200701714
(43) Date of publication of application: 11.08.2010
(73) Proprietor: Mark & Wedell A/S, Ingenior- OG Handelsfirma, 3490 Kvistgård (DK)
(72) Inventor: WEDELL, Anders Sten, DK-3490 Kvistgård (DK); ANDERSEN, Torben Paulli, DK-2960 Rungsted Kyst (DK); DÜMCKE, Bodo, DK-3000 Helsingør (DK)
(74) Representative: Nielsen, Leif
(86) International application number: PCT/DK2008/050261
(87) International publication number: WO 2009/068039

(56) References cited:
- WO-A-95/11440
- DE-A1- 10 309 354
- DE-A1- 19 856 870
- EVANS T G ET AL: "Microwave Technique for On-Line Determination of Unburnt Carbon in Fly Ash" 19920811; 19920811 - 19920813, vol. 1, 11 August 1992 (1992-08-11), pages 563-566, XP010278111

## Description

### Field of the Invention

The present invention concerns a device for measuring unburned carbon in a sample of ash-containing flue gas from combustion of carbonaceous fuel, the device being designed with an ash sampling arrangement and a sample compartment connected thereto, extending through a microwave resonance chamber which is connected to a microwave generator and a microwave receiver, the sampling chamber being provided with valves at inlet and outlet and a level meter.

### Background of the Invention

Fly ash from the combustion of carbonaceous fuel in e.g. coal-fired power plants is an important additive in the making of cement, concrete and asphalt, and thus an important trade item for the power plants which furthermore may avoid expenses regarding deposition of the fly ash. However, this requires that the fly ash complies with certain maximum limit values for the contents of unburned carbon - residual carbon %. Therefore, it is necessary to be able to measure the residual carbon content in the fly ash such that it is ensured that the fly as complies with the required limit values.

The amount of unburned carbon is also an indication of the efficiency of the combustion. This is inversely proportional with the amount of residual carbon in the fly ash. It is desirable to have the proper residual carbon content as this expresses optimal operation of the plant with regard to combustion quality, utilisation of the fuel, usability of the fly ash and emission of contaminating elements, including nitrogen oxides.

It has appeared that the content of residual carbon in the fly ash is dependent on the design of the combustion chamber, the coal quality, how finely the coal is milled in the coal mill, and the rate of heat emission. Therefore, it is particularly desirable to enable continuous measuring of residual carbon content during operation such that it will be possible to adjust the parameters of the combustion, such that it is ensured all the time that the residual carbon content is within acceptable limit values.

There are several technical solutions to measuring the residual carbon content. The present invention uses the technique of microwave resonance measurement.

The amount of fly ash in the sample varies with the influence of the combustion parameters and the degree of compression of the ash sample, which is a significant source of inaccuracy of the measurements. Therefore, it has hitherto been necessary to determine the weight of the sample and to combine this with the result of the microwave resonance measurement. The weighing of the sample is, however, always connected with great uncertainty.

Another method is to produce a sample with a well-defined degree of compression in order to reduce the sensitivity regarding this variable parameter. This method is known from DE 198 56 870 C2 describing an apparatus and a method for measuring residual carbon content in a fly ash sample from a flue gas. The apparatus uses a pneumatic feeding system which operates continually. The fly ash is conducted to a sample volume in a measuring cell which via shutting devices can be isolated with regard to pressure from the rest of the feeding system, such that the sample is not exposed to uncontrolled pressure pulses from the surrounding system. The measuring cell is provided with a device for compressing the sample by mechanical vibration and possibility of heat supply in order thereby to provide a well-defuied degree of compression.

However, by experience it appears that vibration by handling and treating granular media produce segregation in the sample, thus making tit inhomogeneous, and a subsequent sample will thus not provide values which are representative for the sample as a whole.

### Object of the Invention

It is the object of the invention to indicate an apparatus for determining the amount of unburned carbon in ash-containing flue gas from combustion of carbonaceous fuel, more specifically residual carbon content of fly ash, and at the same time reducing uncertainty due to weighing of the sample or compressing the sample by mechanical vibration.

### Description of the Invention

According to the present invention, this is achieved by a device for measuring unburned carbon in a sample of ash-containing flue gas from combustion of carbonaceous fuel of the kind mentioned in the introduction, which is peculiar in that a pressurised air connection for the sample chamber is provided at a position between the inlet valve and the microwave resonance chamber, the pressurised air connection being connected with a source of pressurised air.

The pressurised air connection between the inlet valve and the microwave resonance chamber enables regulation and controlling of the pressure in the sample chamber during a residual carbon measurement. The degree of compression is given by the pressure, and it will be possible to achieve various degrees of compression of the sample by changing the pressure in the sample chamber. Practical experiments have surprisingly shown that it is possible to determine residual carbon content in a fly ash sample by performing at least two measurements at different pressures on the same sample and to combine the recorded measuring values and compare these with a reference curve, and simultaneously partly or completely to eliminate measuring uncertainty due to degree of compression. Moreover, practical experiments have shown that by using pressure variation in a controlled way, an even and homogenous sample is provided such that the sample volume achieves an evenly distributed, representative character. This is a very simple and reliable measuring method that entirely eliminates the previously mentioned measuring uncertainties, as weighing or compressing the sample by mechanical vibration is not a part of the method.

The device enable taking out samples at suitable time intervals such that is becomes possible to use the result for adjusting the combustion if the residual carbon content exceeds a certain limit value.

According to a further embodiment, the device according to the invention is peculiar in that the pressure from the source of pressurised air has two or more fixed settings. In order to avoid mistakes during measurement, the source of pressure is chosen such that the pressure is adjusted in fixed steps. Typically, the source of pressure is chosen such that the pressure can be selected in two steps. In this case, the two steps will preferably be 0 and 1 bar.

According to a further embodiment, the device according to the invention is peculiar in that the pressure from the source of pressurised air is steplessly adjustable. It may be advantageous to choose the source of pressure such that it may deliver a pressure that may be steplessly adjusted. Hereby is achieved that the device can be adjusted such that it may be adapted to a plurality of different power plants.

According to a further embodiment, the device according to the invention is peculiar in that at the pressurised air connection, a pressure transducer, a manometer or other device for pressure measurement is provided. The source of pressure will often be a centrally disposed pressurised air facility to which the device is connected on a source of pressurised air common to the power plant. In such cases it will be advantageous that an operator can read and verify the pressure locally, so that it is ensured that the pressure conditions in the sample are as expected. If using a pressure transducer, it will be possible to connect this to a data collecting system.

According to yet an embodiment, the device according to the invention is peculiar in that the microwave generator is adapted for generating microwaves in the frequency range from 1 GHz to 300 GHz, preferably with frequencies from 2.39 GHz to 2.45 GHz, as resonance frequencies for the designed resonance chamber containing samples of the kind and in the interval desired to be examined will predominantly lie in this area. The resonance frequency for carbon is preferably found in the range from 2.39 GHz to 2.45 GHz. Therefore, it is only necessary to focus on this frequency area when desiring to use the device for measuring the residual carbon contents in fly ash. Much less time is consumed hereby in making a microwave resonance measurement.

According to a further embodiment, the device according to the invention is peculiar in that an additional pressurised air connection for the sample chamber is provided between the outlet valve and the microwave resonance chamber, the pressurised air connection being connected with a source of pressurised air. This pressurised air connection enables emptying of the sample chamber in that the inlet valve is in its open position and the outlet valve in its closed position, while at the same time the source of pressurised air can be connected. The ash sample is returned through the ash sampling arrangement.

According to a further embodiment, the device according to the invention is peculiar in that a container for taking a reference sample is provided after the outlet valve. It is advantageous to provide possibility of taking out the ash sample for further analysis. Such an analysis of the ash sample may be used for calibrating the device. The reference sample is taken in that the inlet valve is in its closed position and the outlet ' valve is in its open position, while simultaneously the source of pressurised air is connected between the inlet valve and the microwave resonance chamber. The ash sample will hereby be conducted out into the container.

The device according to the invention may be used in the following way.

Taking a sample of ash-containing flue gas from combustion of carbonaceous fuel, where the sample is inserted in a sample chamber extending through a microwave resonance chamber, and which is filled to a level above the microwave resonance chamber, where the sample is compressed, where microwave resonance measurement is performed on the sample, and where the measurement is compared with a reference curve for determining the carbon content in the sample.

Before compressing, a first microwave resonance measurement is performed at a first pressure condition and at a first degree of compression. At least one additional microwave resonance measurement is performed at a second pressure condition and a second degree of compression, and the measured values in combination are compared with a reference curve for determining the residual carbon content in the sample.

It is preferred that the first microwave resonance measurement is performed at atmospheric pressure, and that the second microwave resonance measurement is performed at a pressure of 1 bar. Practical experiments have shown that by performing the first measurement at atmospheric pressure without opening the external source of pressure, and by performing the second measurement at a setting of 1 bar for the source of pressure, it is achieved that the microwave resonance measurement is reliable and at the same time economical to perform.

### Description of the Drawing

The invention will then be explained in more detail with reference to the accompanying drawing, where:

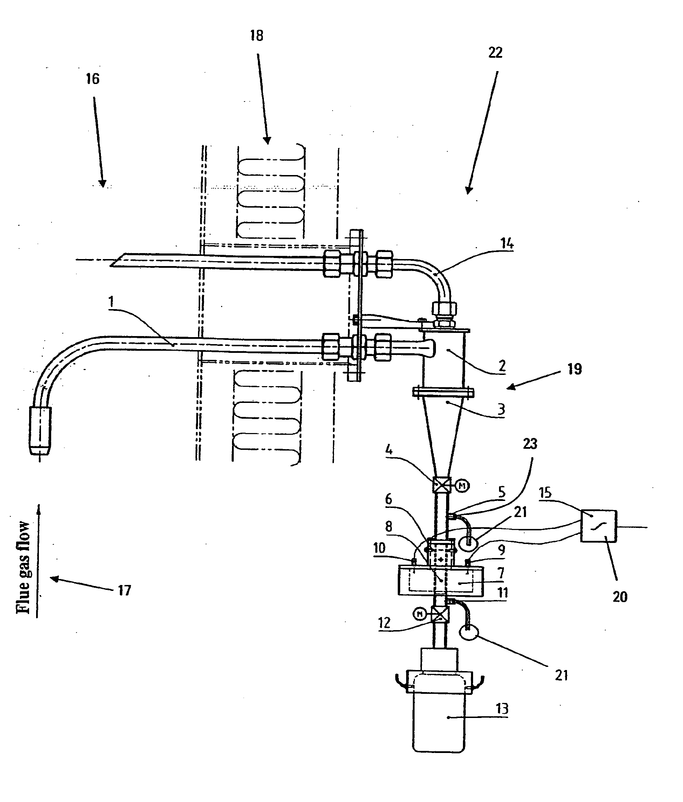

- Fig. 1: shows a schematic view of the device.

### Detailed Description of the Invention

Fig. 1 shows a schematic view of the device 22 and how it may form part of a flue gas system. From a channel 16 delimited by a channel wall 18, ash-containing flue gas 17 is conducted from combustion of carbonaceous fuel in e.g. power plant boilers or other energy producing plants through the exhaust pipe 1. The flow is conducted to an ash sampling arrangement 19 consisting of a separator 2 - a cyclone in the shown example - in which ashes are separated from gas, and a funnel 3 through which the separated ashes are conducted via an inlet valve 4 to a sample chamber 8 extending through a microwave resonance chamber 7. The gas is conducted back to the channel 16 via the pipe 14.

Opposite the inlet end, the sample chamber 8 is provided with an inlet valve 12 which in the open position allows the ashes to get access to a container 13, and which in its closed position shuts off the sample chamber 8. When the outlet valve 12 is closed, the material level in the sample chamber 8 will rise. A level detector 6 is disposed at a position between the microwave resonance chamber 7 and the inlet valve 4. At the moment when the filling reaches the wanted level, the inlet valve 4 is closed so that the sample chamber 8 is closed, and a first measuring sequence is performed.

The measuring sequence is initiated by a microwave generator 15 emitting microwaves via an antenna 10 disposed in the microwave resonance chamber 7. A second antenna 9, which is also provided in the microwave resonance chamber 7, is connected to a microwave receiver 20. By data processing of the emitted and received microwaves, respectively, the natural frequency and attenuation of the sample located in the sample chamber 8 may be determined.

After performing the first measuring sequence, pressurised air is supplied from a source of pressurised air 21 through a pressurised air connection, whereby the degree of compression of the sample is increased, which is given by the applied pressure. In a particular embodiment of the invention, the pressure at the pressurised air connection 5 can be read on a manometer (not shown) or a pressure transducer 23. A second measuring sequence is performed as described above, and the natural frequency and attenuation of the same sample, but with another degree of compression, is determined. After that, the residual carbon content of the sample can be determined by the measured values in combination are compared to a reference curve.

If desired, the measuring frequency can be repeated as described above at increasing degree of compression.

When the measuring frequency is finished, the sample in the sample chamber 8 may be returned to the channel 16 by opening the inlet valve 4, followed by flushing with pressurised air by connecting the source of pressurised air 21 through the pressurised air connection 11.

If the ash portion collected in the sample chamber 8 is desired to be conducted to the container 13, the outlet valve 12 is opened, and flushing with pressurised air is performed by connecting the source of pressurised air through the pressurised air connection 5. Then the outlet valve 12 is closed, the inlet valve 4 is opened, and flushing with pressurised air through the pressurised air connection 11 is performed.

Hereafter, a new collecting cycle is commenced.

## Claims

1. A device (22) for measuring unburned carbon in a sample of ash-containing flue gas from combustion of carbonaceous fuel, the device (22) being designed with an ash sampling arrangement (19) and a sample compartment (8) connected thereto extending through a microwave resonance chamber (7) which is connected to a microwave generator (15) and a microwave receiver (20), the sampling chamber (8) being provided with valves (4, 12) at inlet and outlet and a level meter (6), **characterised in that** a pressurised air connection (5) for the sample chamber (8) is provided at a position between the inlet valve (4) and the microwave resonance chamber (7), the pressurised air connection (5) being connected with a source of pressurised air (21).

2. Device according to claim 1, **characterised in that** the pressure from the source of pressurised air (21) has two or more fixed settings.

3. Device according to claim 1, **characterised in that** the pressure from the source of pressurised air (21) is steplessly adjustable.

4. Device according to any preceding claim, **characterised in that** at the pressurised air connection (5), a pressure transducer (23), a manometer or other device for pressure measurement is provided.

5. Device according to any preceding claim, **characterised in that** the microwave generator (15) is adapted for generating microwaves in the frequency range from 1 GHz to 300 GHz, preferably with frequencies from 2.39 GHz to 2.45 GHz.

6. Device according to any preceding claim, **characterised in that** a further pressurised air connection (11) for the sample chamber (8) is provided between the outlet valve (12) and the microwave resonance chamber (7), the pressurised air connection (11) being connected with a source of pressurised air (21).

7. Device according to any preceding claim, **characterised in that** a container (13) for taking a reference sample is provided after the outlet valve (12).

## Patentansprüche

1. Vorrichtung (22) zum Messen von unverbranntem Kohlenstoff in einer aschhaltigen Rauchgasprobe aus einer Verbrennung von kohlenstoffhaltigem Brennstoff, wobei die Vorrichtung (22) mit einer Aschenprobeentnahme (19) und einer damit verbundenen und durch eine Mikrowellen-Resonanzkammer (7) verlaufenden Probezelle (8) ausgelegt ist, wobei die Resonanzkammer (7) mit einem Mikrowellengenerator (15) und einem Mikrowellenempfänger (20) verbunden ist, und die Probezelle (8) mit Ventilen (4, 12) am Einlaß und am Auslaß sowie mit einem Pegelmesser (6) versehen ist, **dadurch gekennzeichnet, daß** ein Druckluftanschluß (5) für die Probezelle (8) an einer Position zwischen dem Einlaßventil (4) und der Mikrowellen-Resonanzkammer (7) angeordnet ist, und der Druckluftanschluß (5) mit einer Druckluftquelle (21) verbunden ist.

2. Vorrichtung nach Anspruch 1, **dadurch gekennzeichnet, daß** der Druck aus der Druckluftquelle (21) zwei oder mehrere festen Einstellungen aufweist.

3. Vorrichtung nach Anspruch 1, **dadurch gekennzeichnet, daß** der Druck aus der Druckluftquelle (21) stufenlos verstellbar ist.

4. Vorrichtung nach irgendeinem der vorhergehenden Ansprüche, **dadurch gekennzeichnet, daß** am Druckluftanschluß (5) ein Druckgeber (23), ein Drucknesser oder eine andere Vorrichtung zum Druckmessen vorgesehen ist.

5. Vorrichtung nach irgendeinem der vorhergehenden Ansprüche, **dadurch gekennzeichnet, daß** der Mikrowellengenerator (15) zum Erzeugen von Mikrowellen im Frequenzbereich 1 GHz bis 300 GHz, vorzugsweise mit Frequenzen von 2.39 GHz bis 2.45GHz, vorgesehen ist.

6. Vorrichtung nach irgendeinem der vorhergehenden Ansprüche, **dadurch gekennzeichnet, daß** ein weiterer Druckluftanschluß (11) für die Probezelle (8) zwischen dem Auslaßventil (12) und der Mikrowellen-Resonanzkammer (7) vorgesehen ist, wobei der Druckluftanschluß (11) mit einer Druckluftquelle (21) verbunden ist.

7. Vorrichung nach irgendeinem der vorhergehenden Ansprüche, **dadurch gekennzeichnet**, zur Entnahme einer Referenzprobe ein Behälter (3) nach dem Auslaßventil (12) angeordnet ist.

## Revendications

1. Un dispositif (22) pour mesurer le carbone non brûlé dans un échantillon de gaz de combustion contenant de la cendre et provenant de la combustion de combustibles carbonés, le dispositif (22) étant façonné avec un arrangement d'échantillonage de cendres (19) et une chambre d'échantillonnage (8) connectée à celui-ci et s'étendant à travers une chambre de résonance de micro-ondes (7) qui est connectée à un générateur de micro-ondes (15) et un récepteur de micro-ondes (20), la chambre d'échantillonnage (8) étant réalisée avec des soupapes (4, 12) à l'entrée et la sortie et un appareil de mesure de niveau (6), **caractérisé en ce qu'**un raccord d'air comprimé (5) pour la chambre d'échantillonnage (8) est réalisé à une position entre la soupape d'entrée (4) et la chambre de résonance de micro-ondes (7), le raccord d'air comprimé (5) étant connecté à une source d'air comprimé (21).

2. Dispositif selon la revendication 1, **caractérisé en ce que** la pression provenant de la source d'air comprimé (21) comprend deux ou plusieurs réglages fixes.

3. Dispositif selon la revendication 1, **caractérisé en ce que** la pression provenant de la source d'air comprimé (21) est réglable en continu.

4. Dispositif selon l'une quelconque des revendications précédentes, **caractérisé en ce qu'**un capteur de pression (23), un manomètre ou un autre dispositif de mesure de pression est prévu au raccord d'air comprimé (5).

5. Dispositif selon l'une quelconque des revendications précédentes, **caractérisé en ce que** le générateur de micro-ondes (15) est adapté pour générer des micro-ondes dans la gamme de fréquence de 1 GHz à 300 GHz, de préférence avec des fréquences de 2,39 GHz à 2,45 GHz.

6. Dispositif selon l'une quelconque des revendications précédentes, **caractérisé en ce qu'**encore un raccord d'air comprimé (11) pour la chambre d'échantillonnage (8) est prévu entre la soupape de sortie (12) et la chambre de résonance de micro-ondes (7), le raccord d'air comprimé (11) étant connecté à une source d'air comprimé (21).

7. Dispositif selon l'une quelconque des revendications précédentes, **caractérisé en ce qu'**un conteneur (13) est réalisé après la soupape de sortie (12) pour faire un échantillon de référence.
